# EUROPÄISCHE PATENTSCHRIFT

(11) **EP 1 589 543 B1**
(45) Veröffentlichungstag und Bekanntmachung des Hinweises auf die Patenterteilung: **02.05.2007**
(21) Anmeldenummer: 05002621.0
(22) Anmeldetag: 09.02.2005
(51) Int. Cl.: H01B 17/30, H02G 15/04, H02G 15/013, H02G 3/08

(54) **Leitungseinführung und Verfahren zu deren Herstellung**
Conduit entrance and manufacturing process
Entrée de conduite et procédé de fabrication

(30) Priorität: 24.04.2004 DE 102004020162
(43) Veröffentlichungstag der Anmeldung: 26.10.2005
(73) Patentinhaber: Jung Pumpen GmbH, 33803 Steinhagen (DE)
(72) Erfinder: Wiese, Holger, 33699 Bielefeld (DE)
(74) Vertreter: Schober, Mirko

(56) Entgegenhaltungen:
- EP-A- 0 449 088
- WO-A-20/04006401
- DE-A1- 3 308 332
- DE-A1- 3 428 903
- DE-U1- 29 811 465
- FR-A- 2 423 955
- GB-A- 882 170

## Beschreibung

Die vorliegende Erfindung betrifft eine Leitungseinführung nach dem Oberbegriff von Anspruch 1.

Leitungseinführungen der genannten Art werden insbesondere für Kabeleinführungen für wasserfördende Pumpen verwendet. Dabei müssen die Leitungseinführungen das Erfordernis der Längswasserdichtigkeit erfüllen, wobei nicht nur verhindert werden muß, daß Wasser außenseitig am in die Pumpe führenden Kabel vorbei gelangt, sondern auch, daß das Wasser durch die Kabeladern selbst tritt.

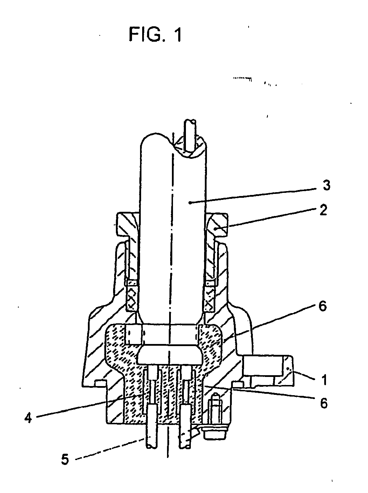

Dies wurde in der Vergangenheit dadurch bewerkstelligt, daß man - wie in Fig. 1 gezeigt - die Kabeladern 5 auf der Innenseite der Leitungseinführung bis zum Kabelmantel 3 hin, üblicherweise mit einem sehr dünnflüssigen Zwei-Komponenten-Harz 6, vergossen hat. Hierzu wurde der Adermantel 5 abschnittweise entfernt, um das Harz 6 zwischen die metallenen Aderlitzen 4 eindringen zu lassen und die abisolierte Stelle 4 der Adern durch Aushärten des Harzes 6 zu ummanteln.

Nachteilig an der bekannten Vorgehensweise ist, daß hierdurch kein wirksamer Explosionsschutz erzielt werden kann. Hierzu hat man mit eingelagerten Partikeln armierte Harze verwendet, welche den für Sicherheitstestate erforderlichen höheren Temperaturwechselbeanspruchungen standhalten können.

Eine Leitungseinführung gemäß Oberbegriff des Anspruchs 1 und ein zugehöriges Herstellungsverfahren sind aus GB 882 170 und DE 33 08 332 A bekannt.

Der Einsatz dieser für den Explosionsschutz erforderlichen armierten Harze führt allerdings zur einer Verschlechterung der Längswasserdichtigkeit, da die festen Partikel ein Eindringen des Harzes in die feinen Zwischenräume zwischen den metallischen Aderlitzen und damit deren Imprägnierung verhindern.

Aufgabe der vorliegenden Erfindung ist es daher, die bekannte Kabeldurchführung so zu verbessern, daß einerseits eine ausreichende Längswasserdichtigkeit und andererseits ein wirksamer Explosionsschutz erzielt werden.

Erfindungsgemäß wird diese Aufgabe durch die Merkmale der Leitungseinführung gemäß Anspruch 1 und das Verfahren zur Herstellung derselben nach Anspruch 2 gelöst.

Weitere bevorzugte Ausführungsformen finden sich in den Unteransprüchen.

Durch den Doppelverguß der Erfindung wird eine zweistufige Imprägnierung vorgenommen, bei der ein Vergußmaterial für die erforderliche Längswasserdichtigkeit sorgt. Das andere Vergußmaterial umschließt das erste Vergußmaterial und sorgt somit für den Explosionsschutz.

Die Erfindung wird nachfolgend anhand von Ausführungsbeispielen schematisch näher erläutert. Es zeigen:
- Figur 1 -: einen Schnitt durch eine Leitungseinführung nach dem Stand der Technik,
- Figur 2 -: eine Schnittansicht eines Teils der Leitungsdurchführung zur Veranschaulichung des erfindungsgemäßen Verfahrens,
- Figur 3 -: eine Schnittansicht eines Teils der Leitungsdurchführung zur Veranschaulichung einer Variante des erfindungsgemäßen Verfahrens,
- Figur 4 -: eine Schnittansicht der erfindungsgemäßen Leitungseinführung vor Einbringen des zweiten Vergußmaterials,
- Figur 5 -: eine Schnittansicht der erfindungsgemäßen Leitungseinführung nach Einbringen des zweiten Vergußmaterials.

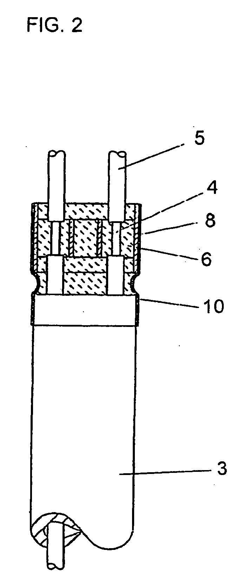

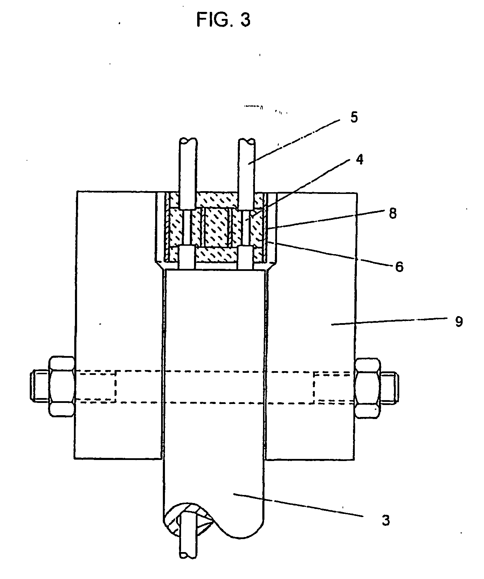

Die Figuren 2 bis 4 verdeutlichen die Herstellung der erfindungsgemäßen Leitungseinführung. Dabei sind zwei Ausführungsvarianten bevorzugt (Fig. 2 und Fig. 3).

In Fig. 2 ist ein Kabelende dargestellt, das einen Kabelmantel 3 aufweist, aus dessen Ende Kabeladern herausragen, die aus einer Litze 4 und eine Ummantelung 5 bestehen. Die Zahl der Kabeladern kann beliebig gewählt sein und ist insbesondere nicht auf die dargestellten zwei Adern festgelegt (auch eine Ader oder mehr als zwei Adern sind möglich). In einem ersten Schritt werden die Kabeladern abisoliert. Anschließend werden die Kabeladern in die gewünschte Lage gebracht, üblicherweise mit einem sternförmigen Spreizelement 8 im gewünschten Abstand fixiert. Zur weiteren Fixierung dieser Anordnung wird diese bevorzugt durch einen Schrumpfschlauch 10 umgeben, der das Spreizelement 8 und das Kabel 3 miteinander fixiert. Nun wird das erste Vergußmaterial 6, bei dem es sich vorzugsweise um ein übliches Zwei-Komponenten-Harz zur Abdichtung gegen Längswassereintrag (vorzugsweise bis zu einem Wasserdruck von mindestens 35 Bar) handelt, so eingefüllt, daß es die Adern im abisolierten Bereich 4 umgibt. Anschließend erfolgt ein Aushärtevorgang, der vorzugsweise mindestens 24 Stunden dauert. Nach dem Aushärten wird der Schrumpfschlauch 10 entfernt.

Eine alternative Ausführungsform dieses ersten Verfahrensabschnitts verdeutlicht Fig. 3. Hier ist auf den Schrumpfschlauch 10 verzichtet worden. Statt dessen ist eine Halterung 9 vorgesehen, die das Kabel 3 und das Spreizelement 8 umgibt und in diesem Beispiel mittels einer Verschraubung fixiert ist. Natürlich sind auch andere Halteeinrichtungen denkbar, die geeignet sind, eine Fixierung von Kabel 3 und Adern 5 in der genannten Weise zu erreichen. Die weitere Vorgehensweise entspricht der Ausführung zu Fig. 2. Nach dem Einfüllen des ersten Vergußmaterials 6 und dem Aushärten desselben, wird die Halterung 9 entfernt.

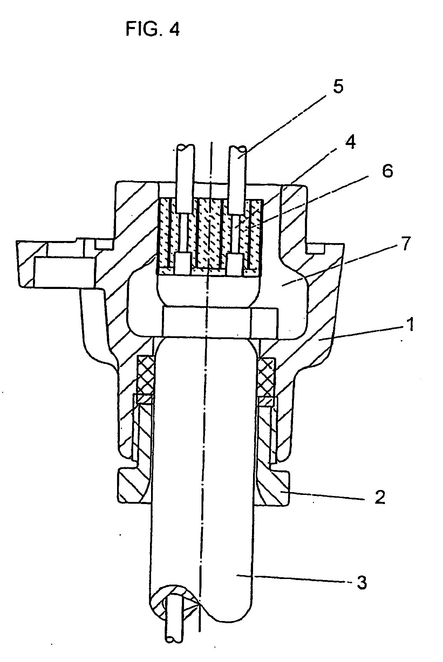

Der weitere Verfahrensablauf ist in Fig. 4 abgebildet. Zunächst wird das Kabel 3 in eine Kabelhalterung 2 (Verschraubung oder dergleichen) eingeführt, entsprechend (etwa durch eine Einohr-Schlauchklemme oder dergleichen) fixiert und dann in ein Gehäuse 1 eingebracht. Dies geschieht so, daß das Kabel 3 mit dem Ende in das Innere des Gehäuses 1 hineinragt, an dem die mit dem ersten Vergußmaterial 6 umgebene(n) Kabelader(n) 5 angeordnet ist (sind). Dabei wird im Inneren des Gehäuses 1 zwischen Kabel 3 bzw. den vergossenen Kabeladern 4, 5 und der Gehäuseinnenseite ein Zwischenraum gebildet, in den das zweite Vergußmaterial 7 eingebracht wird. Dabei sollte vom unteren Rand des Spreizelements 8 zur Innenseite des Gehäuses 1 wenigstens 1 cm Abstand liegen, um die Explosionsgefahr zu verringern. Bei diesem zweiten Vergußmaterial 7 handelt es um eines, welches gute Eigenschaften hinsichtlich der Reduzierung der Explosionsgefahr aufweist; vorzugsweise wird hier ein durch eingelagerte Partikel armiertes Harz (oder Kunststoffmaterial) verwendet, das auch bei Betriebstemperaturen von mindestens 90°C noch die Sicherheit gegenüber Explosionsgefahr gewährleistet. Nach dem Einbringen des zweiten Vergußmaterials 7 läßt man dieses aushärten, vorzugsweise mindestens 12 Stunden lang.

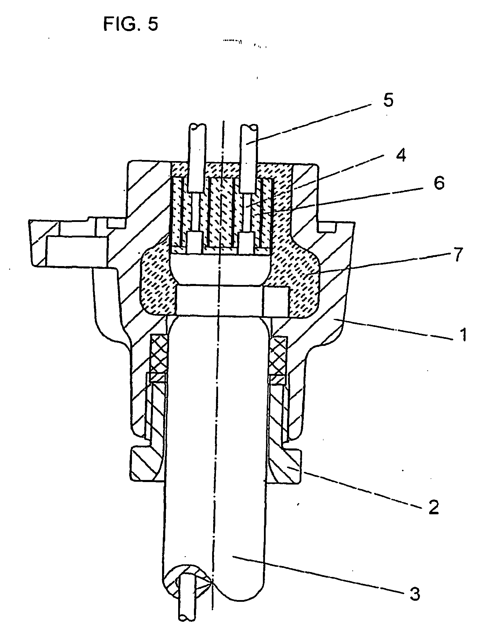

Fig. 5 zeigt schließlich ein Beispiel für die fertige Leitungseinführung. Das zweite Vergußmaterial 7 umgibt (zumindest abschnittweise) das erste Vergußmaterial 6, insbesondere in dem Bereich, an dem das Kabel 3 nach außen tritt.

Durch den erfindungsgemäßen Doppelverguß 6, 7 wird einerseits die erforderliche Längswasserdichtigkeit erzielt (Verguß 6), und andererseits kann gleichzeitig durch einen zweiten Verguß 7 die Explosionsgefahr wirksam reduziert werden.

## Patentansprüche

1. Leitungseinführung mit einem Gehäuse (1) zur Aufnahme eines Kabels (3), das wenigstens eine mit einem Mantel (5) umschlossene Kabelader (4, 5) enthält, wobei der Mantel (5) der Kabelader (4, 5) auf der Gehäuseinnenseite in einem Abschnitt entfernt ist, wobei die wenigstens eine Kabelader (4, 5) im Bereich dieses Abschnitts von einem ersten Vergußmaterial (6) umgeben ist, wobei ein zweites Vergußmaterial (7) vorgesehen ist, welches zumindest abschnittweise den genannten Bereich und einen Teil des Kabels (3) umgibt,
**dadurch gekennzeichnet,**
**daß** es sich bei dem ersten Vergußmaterial (6) um ein wasserabweisendes Harz oder Kunststoffmaterial und bei dem zweiten Vergußmaterial (7) um ein armiertes Harz handelt, das eingelagerte Partikel aufweist.

2. Verfahren zur Herstellung einer Leitungseinführung nach Anspruch 1, welches folgende Schritte aufweist:
abschnittweises Freilegen der Kabelader (4, 5) durch Entfernen des Mantels (5);
Fixieren des Kabels (3) durch eine Fixierung (9, 10) derart, daß insbesondere der freigelegte Abschnitt eingeschlossen wird;
Einbringen des ersten Vergußmaterials (6), so daß es den freigelegten Abschnitt umgibt;
Aushärten des ersten Vergußmaterials (6);
Entfernen der Fixierung (9, 10);
Einbringen des Kabels (3) in das Gehäuse (1);
Einbringen des zweiten Vergußmaterials (7), so daß es das erste Vergußmaterial (6) umgibt;
Aushärten des zweiten Vergußmaterials (7).

3. Verfahren nach Anspruch 2,
**dadurch gekennzeichnet,**
**daß** zum Fixieren ein Schrumpfschlauch (10) verwendet wird.

4. Verfahren nach Anspruch 2,
**dadurch gekennzeichnet,**
**daß** zum Fixieren eine Halterung (9) verwendet wird.

5. Verfahren nach einem der Ansprüche 2 bis 4,
**dadurch gekennzeichnet,**
**daß** die Kabeladern (4, 5) vor dem Einbringen des ersten Vergußmaterials (6) durch ein Spreizelement (8) fixiert werden.

6. Verfahren nach einem der Ansprüche 2 bis 5,
**dadurch gekennzeichnet,**
**daß** das erste Vergußmaterial (6) wenigstens 24 Stunden aushärtet.

7. Verfahren nach einem der Ansprüche 2 bis 6,
**dadurch gekennzeichnet,**
**daß** das zweite Vergußmaterial (7) wenigstens 12 Stunden aushärtet.

## Claims

1. Conduit entrance with a housing (1) for receiving a cable (3) which contains at least one cable conductor (4, 5) enclosed by a sheath (5), wherein the sheath (5) of the cable conductor (4, 5) has been removed in a portion on the inner side of the housing, wherein the at least one cable conductor (4, 5) is surrounded in the region of this portion by a first casting material (6), wherein a second casting material (7) is provided which surrounds said region at least in sections and surrounds a part of the cable (3),
**characterised in that**
the first casting material (6) is a water-repellent resin or plastic material and the second casting material (7) is a reinforced resin which comprises deposited particles.

2. Process for manufacturing a conduit entrance according to claim 1 which comprises the following steps:
portion-wise exposure of the cable conductor (4, 5) through the removal of the sheath (5);
fixing of the cable (3) by a fixing element (9, 10) in such a way that the exposed portion in particular is enclosed;
introduction of the first casting material (6) so that it surrounds the exposed portion;
hardening of the first casting material (6);
removal of the fixing element (9, 10);
arrangement of the cable (3) in the housing (1);
introduction of the second casting material (7) so that it surrounds the first casting material (6);
hardening of the second casting material (7).

3. Process according to claim 2,
**characterised in that**
a shrinkable tubing (10) is used for fixing.

4. Process according to claim 2,
**characterised in that**
a holding element (9) is used for fixing.

5. Process according to one of the claims 2 to 4,
**characterised in that**
the cable conductors (4, 5) are fixed by an expanding element (8) before the introduction of the first casting material (6).

6. Process according to one of the claims 2 to 5,
**characterised in that**
the first casting material (6) hardens for at least 24 hours.

7. Process according to one of the claims 2 to 6,
**characterised in that**
the second casting material (7) hardens for at least 12 hours.

## Revendications

1. Entrée de conduite avec un boîtier (1) pour la réception d'un câble (3) qui comprend au moins un conducteur (4, 5) entouré d'une gaine (5), ladite gaine (5) du conducteur (4, 5) étant supprimée sur une section, sur la face intérieure du boîtier, le conducteur (4, 5) au moins prévu étant entouré, dans la région de cette section, avec un premier matériau de scellement (6), un deuxième matériau de scellement (7) étant prévu, lequel entoure, au moins en partie, ladite région et une partie du câble (3),
**caractérisée en ce que**
le premier matériau de scellement (6) est une résine ou une matière synthétique hydrofuge, et le deuxième matériau de scellement une résine armée dans laquelle sont noyées des particules.

2. Procédé pour la fabrication d'une entrée de conduite selon la revendication 1, lequel comprend les étapes suivantes :
- Dénudation partielle du conducteur (4, 5) par enlèvement de la gaine (5);
- Fixation du câble (3) au moyen d'une fixation (9, 10) de manière à ce qu'elle englobe en particulier la section dénudée; - Application du premier matériau de scellement (6) de manière à ce qu'il entoure la section dénudée;
- Enlèvement de la fixation (9, 10);
- Aménagement du câble (3) dans le boîtier (1);
- Application du deuxième matériau de scellement (7) de manière à ce qu'il entoure le premier matériau de scellement (6);
- Durcissement du deuxième matériau de scellement (7).

3. Procédé selon la revendication 2,
**caractérisé en ce que**,
pour la fixation, un tube flexible thermorétractable (10) est utilisé.

4. Procédé selon la revendication 2,
**caractérisé en ce que**,
pour la fixation, une attache (9) est utilisée.

5. Procédé selon l'une des revendications 2 à 4,
**caractérisé en ce que**
les conducteurs (4, 5) sont fixés au moyen d'un élément écarteur (8) avant l'application du premier matériau de scellement (6).

6. Procédé selon l'une des revendications 2 à 5,
**caractérisé en ce que**
le premier matériau de scellement (6) durcit pendant au moins 24 heures.

7. Procédé selon l'une des revendications 2 à 6,
**caractérisé en ce que**
le deuxième matériau de scellement (7) durcit pendant au moins 12 heures.
